# EUROPEAN PATENT SPECIFICATION

(11) **EP 3 386 296 B1**
(45) Date of publication and mention of the grant of the patent: **04.08.2021**
(21) Application number: 16819156.7
(22) Date of filing: 07.12.2016
(51) Int. Cl.: A01M 1/22, A01M 1/10, A01M 1/14, A01M 1/02

(54) **A METHOD AND DEVICE FOR DETECTING INSECT INFESTATION**
VERFAHREN UND VORRICHTUNG ZUR DETEKTION VON INSEKTENBEFALL
PROCÉDÉ ET DISPOSITIF DE DÉTECTION D'INFESTATION D'INSECTES

(30) Priority: 09.12.2015 GB 201521690
(43) Date of publication of application: 17.10.2018
(73) Proprietor: Naylor, Richard, Chepstow, Monmouthshire NP16 7JD (GB)
(72) Inventor: Naylor, Richard, Chepstow, Monmouthshire NP16 7JD (GB)
(74) Representative: Wynne-Jones IP Limited
(86) International application number: PCT/GB2016/053851
(87) International publication number: WO 2017/098239

(56) References cited:
- AU-A1- 2012 202 235
- CN-A- 1 207 646
- US-A- 3 986 292
- US-A1- 2009 223 115

## Description

This invention relates to method and device for detecting insect infestation, in particular an automated method and device for detecting bed bugs.

Bed bugs are insects that feed off of humans or other warm blooded creatures. Although bed bugs have been known for centuries, they have become extremely prevalent in recent years. This has led to the need for the development of suitable detection and treatment techniques.

Bed bugs are notoriously difficult to detect since they are nocturnal and extremely elusive. They prefer to live in crevices or other dark enclosed sites during the day where they form a micro-environment. They are attracted to heat and carbon dioxide, and tend to harbour in close proximity to the feeding site, such as inaccessible voids within the structure of the bed, or between the mattress and the bed frame.

Several methods have been established enabling the detection of bed bugs. For example it is known for the detection of bed bugs by the identification of bites left on a person they have been feeding on. The bites have the appearance of a red bump and are often found in clusters. However, the bites take time to appear and can be confused with bites from other insects, for example mosquitos or fleas. Also, it is preferable to detect the presence of bed bugs prior to them feeding on a human, especially in the hospitality industry, where bitten guests can result in considerable negative publicity.

Visual inspection for both the bed bugs and the cast skins and faecal material they leave behind is reasonably successful when conducted by a trained technician, but this approach is extremely labour intensive and is generally only employed in situations where bed bugs are suspected, rather than as a routine early detection measure.

It is known to use a corrugated cardboard structure for the detection of bed bugs. The corrugated card arrangement is favoured by the bugs since they like to hide in the corrugations. The card board itself is an easy material for the bugs to walk on and the holes are formed of a suitable dimension for the bugs to hide in. The problem associated with such devices is that these monitors are difficult to check because the user has to look down the corrugations to see if there are bugs present. This is an extremely time consuming process.

Glue traps, sometimes used in conjunction with heat pads and/or carbon dioxide sources for luring the bed bugs, are an alternative known bed bug detection method, however they are often bulky and in a hospitality setting it is difficult to hide them discretely. Heat pads and carbon dioxide sources also need regular (often daily) replenishing, which is labour intensive and expensive. They are also less effective in occupied rooms where the trap is competing with the heat and carbon dioxide generated by the sleeping person.

Detectors also exist which use compounds to detect whether a bed bug is present. However, such methods fail to detect bed bugs at low infestation levels.

US 2009/223115 A1 discloses an insect monitor comprising an electrode grid and a capacitance sensing circuit.

In all the above cases, once the presence of bed bugs has been detected an appropriate treatment is applied.

Therefore, the present invention and its embodiments are intended to address at least some of the above described problems and desires. In particular, a real time automated detection method and apparatus for detecting bed bugs is required that is capable of making an early detection prior to a significant infestation being established, and with minimal labour.

According to a first aspect of the invention there is provided a device for detecting an insect comprising:
an insect harbourage having a first and second side wall, at least part of the first side wall being spaced apart from at least part of the second side wall so as to define an insect receiving zone therebetween;
a first electrically conductable portion located on, or adjacent to the first side wall;
a second electrically conductable portion located on or adjacent to the second side wall, the first and second electrically conductable portions forming at least part of an electrical component wherein the electrical component is configurable between a first operative state in which the zone is void of any insects causing the electrical component to have a predetermined first capacitance value and a second operative state in which the zone is in receipt of an insect causing the component to have a second capacitance value differing to the first capacitance value, wherein the predetermined first capacitance value is dependent on the value of an atmospheric parameter, characterised wherein the harbourage further comprises a corrugated structure sandwiched between the first and second walls.

This provides an automated detection method that indicates a presence of a bed bug in real time. The conductable portions may be an integral part of the wall, or may be separate and distinct from the wall.

The device may further comprise an electrical circuit in which the electrical component is configured.

The circuit may comprise an electrical power source.

The electrical power source may comprise a battery. However the power source may be mains electricity that has been passed via a transformer to and an analogue to digital converter.

A first and second electrically conductive wire may be connected between the electrical circuit and the first and second electrically conducting plates respectively.

The electrical component may be a capacitor.

The capacitor may be a dielectric layer comprising air.

The dielectric layer may further comprise the harbourage.

Change of the composition of the dielectric may occurs when at least one insect is received in the zone which in turn causes changes in the capacitive field of the device. These changes can be detected. Therefore the method may further comprise detecting a change in capacitance in the circuit between the first operational state and the second operational state.

The device may further comprise a monitoring means for monitoring the capacitance field value and determining whether there is a deviation from the predetermined first capacitance value.

The monitoring means may comprise a capacitive field detector.

The harbourage may comprise cardboard.

The harbourage may be an elongate structure configured to be positionable in narrow spaces, for example between a mattress and a bed frame.

The predetermined electrical parameter value may be dependent on the value of an atmospheric parameter.

The atmospheric parameter may be temperature and/or humidity.

The electrical parameter may be capacitance.

The first and second conductable plates may comprise a conductive coating applied to at least a portion of the surface of the first side wall and the second side wall of the harbourage.

The first and second conductable plates may comprise copper tape located on the first and second wall respectively.

The first and second plates may be applied to an external surface of the first and second wall respectively.

An electrically insulating layer may be applied to the first and second plates.

In a first operative state the first electrically conductable portion may be electrically isolated from the second conducting portion across the channel to create an open circuit and in a second operative state,
the first electrically conductable portion is electrically coupled to the second conducting portion across the channel to create a closed circuit.

The first conductable portion may be located on at least a portion of an internal surface of the first side wall of the harbourage and the second conductable portion is located on at least a portion of an internal surface of the second side wall of the harbourage.

In the first operative state the first conducting portion may be spaced apart from the second conducting portion to provide electrical isolation across the zone.

In the second operative state an insect may be located within the zone such that it makes contact with the first and second conductable portions to electrically couple the first electrically conductable portion to the second conductable portion across the zone.

The device may further comprise a monitoring means for determining a change in an electrical circuit parameter between the first operational state and the second operational state.

The circuit parameter may be resistance or impedance.

The monitoring means may comprise a resistance monitoring circuit.

The device may further comprising an optical emitter positioned in series or in parallel with the electric power source and an optical sensor for monitoring the change in optical emission from the optical emitter between the first operational state and the second operational state.

The first and second electrically conductive portions may comprise a conductive coating applied to at least a portion of the internal surface of the first side wall and the second side wall of the harbourage.

The first and second side walls of the channel may diverge. This varies the separation distance between the side walls and enables different sixed insects to be detected.

The cross section of the channel may be substantially 'V' shaped so as to form a crevice for receiving an insect. This is the simplest cross section to be achieved, but other cross sections would also provide a desirable crevice for an insect.

There may be included a clip for holding the channel in a predetermined 'V' shape. The clip therefore helps to maintain the desired channel or crevice.

The clip may have an attachment member attachable with a frame of a bed. Therefore, the channel may be secured to a remote object. This need not be a frame of a bed.

The channel walls may comprise a plastic. However, any other electrically insulating material may be applied.

The channel may comprise a foldable plastic strip. This means that the plastic is flexible, yet able to be retained in the folded configuration.

The device may comprise an insect detection indicator for generating a signal representative of the presence of an insect within the harbourage. This ensures that a user is alerted that a bed bug is present and can act accordingly.

The insect detection indicator may comprise an audio signal and/or a visual signal.

The detection indicator may be an output signal.

The device may further comprise a wireless signal transmitter for emitting the output signal to a location remote from the device. The remote location may be a laundry room or office in a hotel remote from the bedrooms in which the devices are located, or may be the head office of the hotel. The device can similarly be used in care homes or hospitals or other locations where there are several beds. Alternatively the device may be used in a private residence.

The device may further comprise communications circuitry for receiving the output signal.

In a further aspect of the invention there is provided a method of detecting an insect, the method comprising:
providing a harbourage having a first and second side wall, the first side wall having a first electrically conductable portion positioned on or adjacent to the side wall and the second side wall having a second electrically conductable portion positioned on or adjacent to the second side wall, at least a portion of the first and second side wall being spaced apart from each other and defining an insect receiving zone, the method comprising
monitoring for a change in the operational state of the device from a first electrical state having a predetermined first capacitance value to a second operative state having a second capacitance value differing to the first capacitance value;
determining that at least one insect being positioned in the zone, wherein the predetermined first capacitance value is dependent on the value of an atmospheric parameter.

In the first operational state there may be provided an open circuit and in the second operational state there is provided a closed circuit.

The method may further comprise detecting a resistance or impedance change in the circuit between the first operational state and the second operational state.

The method may further comprise measuring the resistance or impedance of the circuit in the second operational state.

The method may further comprise identifying the type of insect in dependence upon the measured resistance or impedance in the second operational state.

In the first operational state the first and second conducting portions may be plates of a capacitor and the method may further comprise detecting a capacitance change in the circuit between the first operational state and the second operational state.

Changing the composition of the dielectric of the capacitor by receipt of an insect in the zone may change the value of the capacitance field.

The method may further comprise measuring the capacitance of the circuit in the second operational state.

The type of insect may be determined in dependence upon the measured capacitance in the second operational state.

The method may further comprise applying an electrical source between the first and second conduction portions.

The method may further comprise activating an indicator when an insect is present within the harbourage.

An audio or visual alarm may be activated as the indicator. Alternatively, an output signal may be activated as the indicator.

The method may further comprise transmitting the output signal to a remote location.

The method may further comprise wirelessly transmitting the output signal to a remote location.

Wherein the circuit may include an optical emitter and the method further comprises detecting a change in the optical emission of the optical emitter between the first operational state and the second operational state. The optical emitter may be positioned in series or in parallel with the electric power source and an optical sensor for monitoring the change in optical emission from the optical emitter between the first operational state and the second operational state may be provided. Alternatively the LED may be an indicator in itself.

Whilst the invention has been described above it extends to any inventive combination of the features set out above, or in the following description, drawings or claims. For example, any features described in relation to any one aspect of the invention is understood to be disclosed also in relation to any other aspect of the invention.

The invention will now be described, by way of example only, with reference to the accompanying drawings, in which:-
Figure 1 is a perspective view of an insect detection device according to the invention;
Figure 2 is a top view of the insect detection device of Figure 1;
Figure 3 is a bottom view of the insect detection device of the invention;
Figure 4 is an end view of the insect detection device of the invention;
Figure 5 is a view of the circuit board used to connect the electronics to the conductable portion;
Figure 6 is a schematic view of the insect detection device with a bed bug in the channel;
Figure 7 is a schematic view of the insect detection system in the first operational state;
Figure 8 is a schematic view of the insect detection system in the second operational state;
Figure 9 is a side view of the device of Figure 6;
Figure 10 is a schematic view if the device of Figure 6 arranged in a clip according to the invention and
Figure 11 is a schematic view of the insect detection system of Figure 8 including the optical detector.

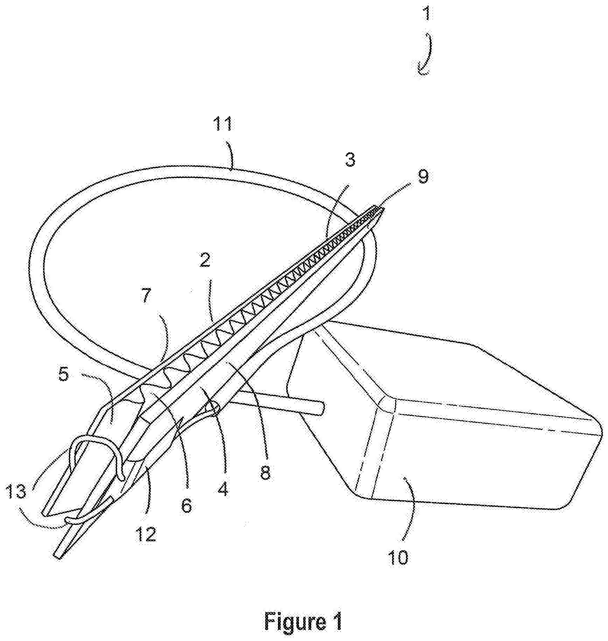

Referring firstly to Figure 1, there is shown a device 1 for detecting an insect. The device 1 comprises an elongate harbourage 2 having a first wall 3 and a second wall 4 spaced apart from the first wall 3. A corrugated structure 5 is arranged between the first and second wall 3, 4. The corrugations of the corrugated structure 5 provide multiple channels 6 for the bugs to enter and inhabit. A suitable harbourage 2 is, for example a piece of corrugated cardboard. However, alternative materials that are electrical insulators, but that are an efficient supporter of an electric field may be applied.

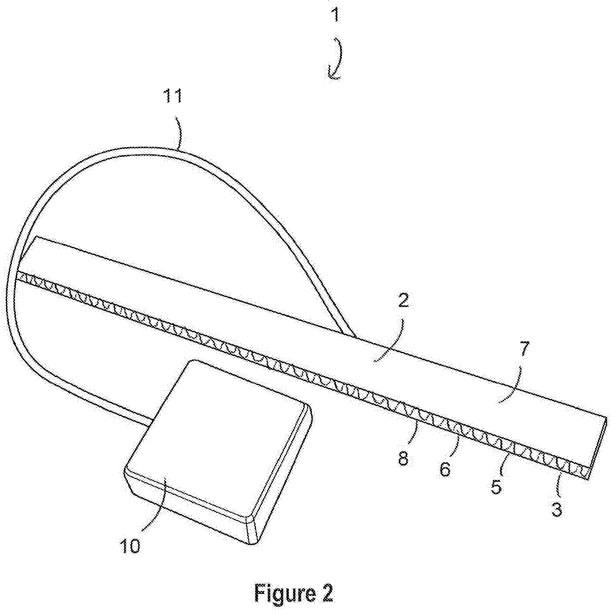

The first wall 3 has a first portion of an electrically conducting means 7 applied to a surface thereof, for example the external surface therof. In Figure 2 the electrical conductor 7 is copper tape stuck to an external surface of the first wall 3. Similarly, the second wall 4 has a at leats a portion of a second electrically conducting means 8 applied to a surface thereof, for example copper tape adhered to the external surface thereof. The copper tape is applied along a substantial length of the first and second elongate wall 3, 4 of the harbourage 2. This arrangement forms parallel conducting plates. The copper plates are covered with an insulator 9 to ensure that the electrical conductors 7, 8 are electrically isolated from any surrounding structures that happen to come into contact with the external surface of the harbourage 2. The insulator 9 may be a plastic strip, tape or other suitable means.

The corrugated card arrangement is favoured by the bugs since they like to hide in such structures. The cardboard itself is an easy material for the bugs to walk on and the holes are the right dimensions for them to hide in.

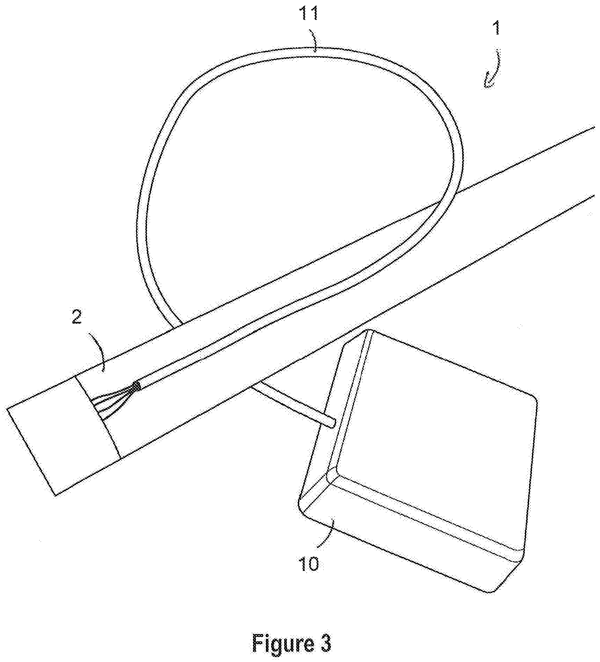

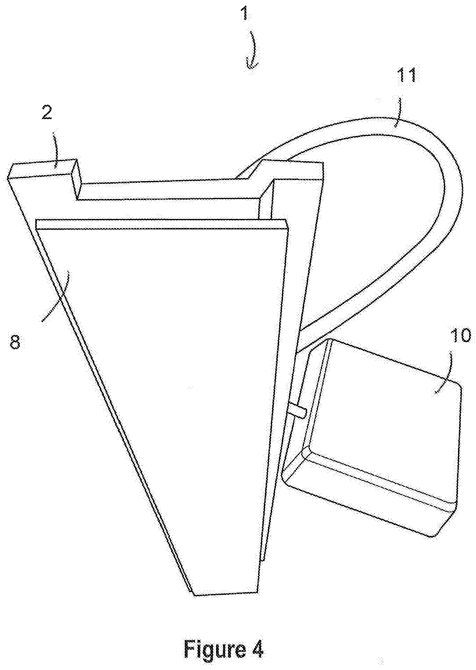

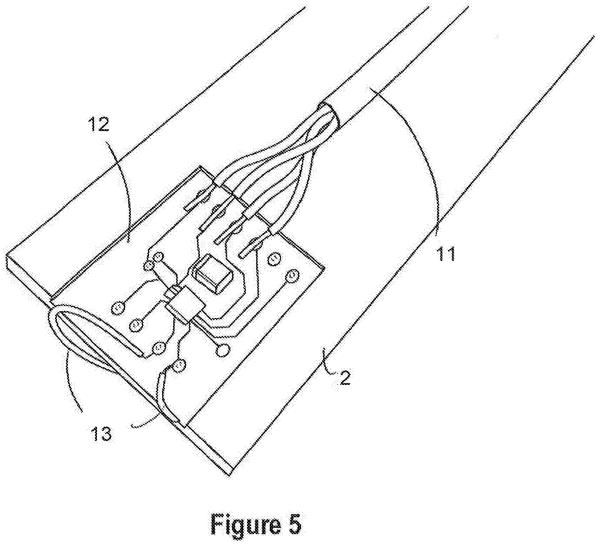

A housing 10 separate and distinct from the harbourage 2 is provided in which is located a power source (not shown), for example a battery, control electronics and components as well as a means for providing computing and wifi connectivity. An electrically conductive wire 11 is connected between the electronics located in the housing 10 and the first and second electrically conducting plates 7, 8. In use, the wire 11 is arranged to be concealed out of the way (e.g. inside the bed base). The connection point of the electrically conducting wire 11 may be seen in Figure 3. Figures 4 and 5 show that in one of the walls of the harbourage 2 is located a circuit board 12 to which the end of the electrically conductive wire is fixed to a conducting track. This circuit board 12 includes the capacitance detecting module, which must be located as close to the harbourage as possible to avoid detecting capacitance in the connecting wires which would increase background noise and reduce sensitivity of the device. A further wire pair 13 is provided for electrically connecting the electrically conducting portion on the circuit board 12 to the first and second conducting means 7, 8 respectively.

The battery and other electronics are bulky elements of the device 1, therefore by keeping the harbourage 2 separate and distinct from the control electronics, the harbourage 2 is capable of fitting in narrow locations, such as behind the headboard or between the mattress and the divan base of a bed which is typically where the bugs congregate.

In use the bug detector 1 uses a method of detection based on the capacitive field provided, whereby a capacitive field is generated between and around the parallel conductive plates 7, 8. The air and cardboard provided between the plates 7, 8form a dielectric. Therefore the parallel plates 7, 8 and the dielectric form a parallel plate capacitor. The combination of air and harbourage material provides a predetermined dielectric constant.

Any change in the composition of the dielectric, changes the measured value of the capacitive field. Therefore, when a bug enters the dielectric field this is registered as a change in the E field and the bug is detected. As a result, when a bug crawls or otherwise moves into a channel 6 providede in the corrugated region 5 between the first and second walls 3, 4 (and therefore the first and second conducting plates 7, 8) it causes a change in the dielectric constant and therefore the capacitance. In contrast to the version of the device that measures resistance that is described in embodiment 2 below, the bug need not make contact with the walls of the device itself, therefore the detection technique is extremely reliable.

Due to the predetermined value of the dielectric, the device 1 will have a predetermined capacitance associated with it. Any deviation from this predetermined value will be an indication of the presence of a bug or insect. For example the presence of a bug is clearly identifiable as a spike on a capacitance graph (a capacitance vs time graph) and this can be considered as a detection. However, since the bug tends to move around in the harbourage 2, they may be detected more than once. Therefore the device 1 gives an estimate of the number of bugs by monitoring the number of capacitive spikes, where a spike is effectively a deviation from the predetermined threshold value.

Changes in ambient temperature and humidity in the room may cause the capacitance of the harbourage dielectric to change over time. It is therefore necessary to detect bugs as capacitive changes relative to a floating threshold rather than a fixed value. Therefore, information on the temperature and humidity is monitored and used to determine a predetermined threshold value. These detections can then be processed and sent over Wi-Fi internet to the monitoring servers and the data can be viewed on a computing device located remote from the location of detection.

An insect detection indicator 14 generates a signal so as to indicate the presence of an insect within the harbourage.

The insect detection indicator 14 may take several forms, for example it may be an audio signal and/or a visual signal. Alternatively, the detection indicator may be an output signal. The output signal may be transmitted to a remote location by a wireless signal transmitter (not shown). Communications circuitry 15 is included for receiving and distributing the output signal either to a location on the device or a remote location. The communications circuitry 15 may be built into the insect monitoring device 1, or may be a separate and distinct element that is capable of being electrically coupled to the insect monitoring device 1.

A microcontroller 16 is arranged to control the electric power to the device 1. This enables a standby mode to be applied providing low power modes for microcontroller operation, also in the low power mode all microcontroller peripheral circuitry can be shut down for predetermined periods of time. This ability to switch to a low power mode enables the device 1 to conserve energy and extends the operational lifetime of the battery corresponding to the running of the device 1. For example, this standby setting may be dependent on a timer such that at night, when the bed bugs are active, there is no or minimum electrical energy provided to the circuit. This may be required since the user may not wish to trigger an audio alert in the middle of the night when they are sleeping.

In the case that the electrical circuit parameter is capacitance, a capacitive field detection method may be applied to determine a change in capacitance between the first operational state and the second operational state. This enables a positive real time detection of an insect located in the corrugation channel 6. Since the insect utilises the channel 6 during the day, alarms or other indicators may be applied without there being a concern for waking a sleeping person. As such the detection method is completely automated and does not require user input e.g. detection by eye.

In the insect monitoring system of Figure 1, an electrical energy power source is provided between the first and second electrically conductable portions 7, 8. The electrical power source comprises a battery which is connected to the first and second electrically conducting portions by electrical conductors.

A change in an electrical circuit parameter, for example the capacitance of the circuit, is detected between the first operational state and the second operational state. The change in capacitance is monitored by a capacitive field detector. In the case that an insect is located in the channel 6 formed by the corrugations 5 in the harbourage 2 i.e. in the insect receiving zone, the second operational state is triggered, the method includes activating an indicator 14 informing the user of the presence of an insect within the channel. The indicator 14 therefore reports the presence of the insect, for example a bed bug, in the channel. The indicator 14 may be an audio or visual alarm. Alternatively, the indicator may be an output signal. The output signal is transmittable to a remote location, for example to a computer or microprocessor for controlling an indicator at a remote location. Wireless transmission, for example WI Fl, is desirable leading to the need for the device to have a wireless transmitter and accompanying circuitry.

In the second operational state, it is not just the change in capacitance that is detected, but also the actual capacitance present in the circuit is measured. This enables the type of insect to be identified in dependence upon the measured capacitance, whereby different insects are associated with different electrical capacitances.

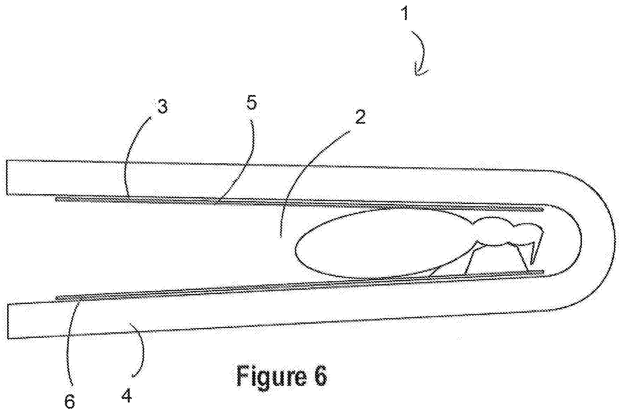

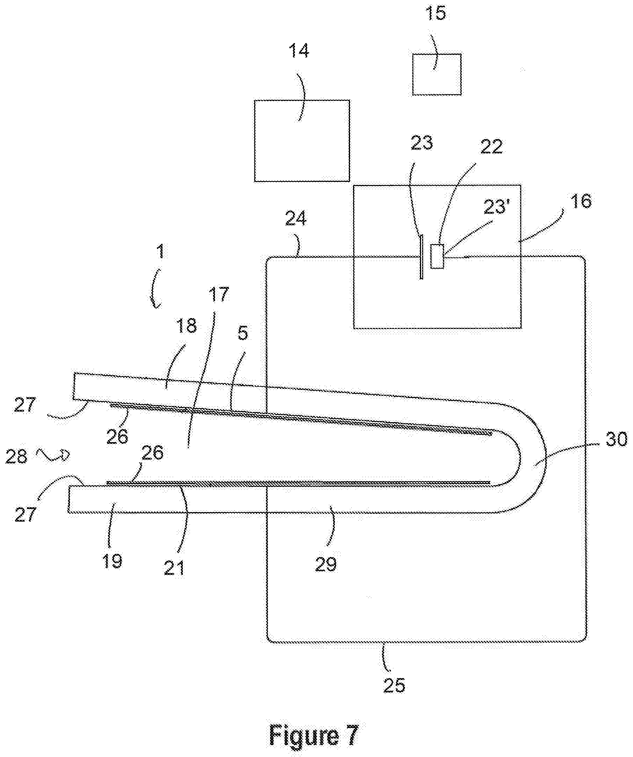

In a second embodiment of the invention as shown in Figure 6, there is shown an insect receiving channel 17 having a first and second side wall 18, 19, 4. A first electrically conductable portion 20 is located on the first side wall 18 and a second electrically conductable portion 21 is located on the second side wall 19. As shown in Figure 7, in use, an electrical power source 22 is arranged between the first and second conductable portion 20, 21 such that the first electrically conductable portion 20 is connectable to a first terminal 23 of the electric power source 22 and the second conducting portion is connectable to the second terminal of the electrical power source 22. In a first operational state the first conductive portion 20 is electrically isolated from the second conducting portion across the channel 17 to create an open circuit. This is because the first electrically conducting portion 20 is spaced apart from the second electrically conducting portion 20 to provide electrical isolation across the channel 17.

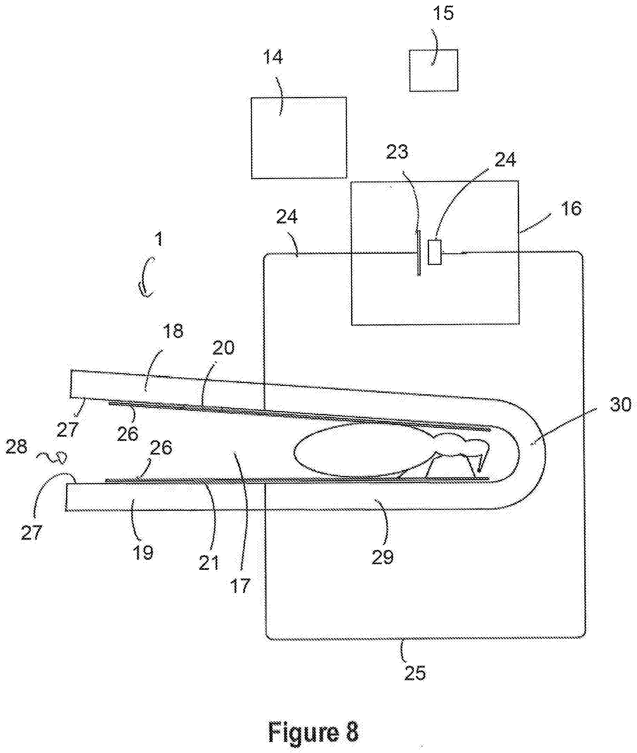

However, in a second operational state, which is the insect detection state as shown in Figure 8, the first conducting portion 20 is electrically coupled to the second electrically conducting portion21 across the channel 17 to create a closed circuit. Conductors 24, 25 are arranged between the poles of the electrical power source and the first and second electrically conducting portion respectively. The conductors 24, 25 may be, for example copper wires, or copper tracking on a circuit board. Electrical coupling between the first conducting portion 20 and the second conducting portion 21 occurs across the channel 18 when an insect is located within the channel 18 and in contact with the first and second conductive portions 20, 21, thereby completing the conducting path around the circuit. Therefore, the second operational state only arises when an insect is present within the channel. A monitoring means is arranged to determine a change in an electrical circuit parameter between the first and second operational state.

The first and second conductive portions 20, 21 comprise an electrically conductive coating 26 applied to at least a portion of the internal surface 27 of the first side wall 18 and the second side wall 19 of the channel 17 respectively. The first and second side walls 18, 19 of the channel 17 are arranged to diverge at the entrance or inlet 28 of the channel 17. As shown in Figure 8 the channel is substantially 'V' shaped so as to form a crevice for receiving an insect. Therefore, the channel mimics the harbourages which bed bugs commonly frequent in the rooms they infest. Such crevices are usually preferred by bed bugs, during the day.

In the insect monitoring system of Figure 7, an electrical energy power source 22 is provided between the first and second electrically conductable portions 20, 21. The electrical power source 22 comprises a battery which is connected to the first and second electrically conducting portions 20, 21 by electrical conductors 24, 25.

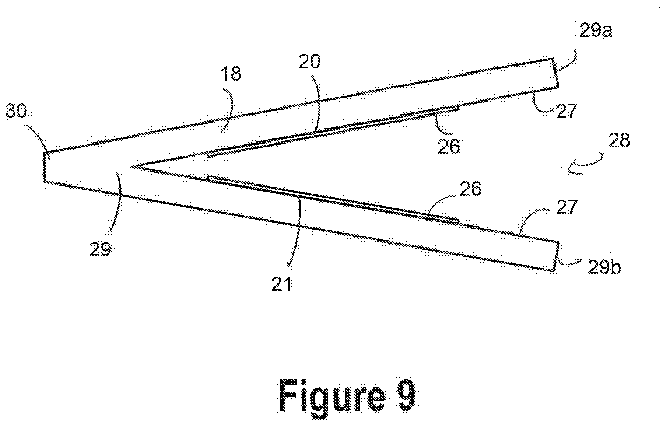

The channel walls 18, 19 comprise a plastic, for example a durable and inexpensive plastic such as PVC. The side walls 18, 19 of the channel 17 are formed from an elongate plastic strip 29 that is folded at a region 30 intermediate to the first and second ends 29a, 29b of the strip 29 to form a first and second channel wall, as shown in Figure 9.

A conductive surface is applied to each channel wall. The two conductive surfaces are arranged at an angle so as to form a crevice. The angular nature of the crevice enables crevice dwelling insects of any size to fit there-between and to come into contact with the first and second conductive circuit so as to enable an electrical current to pass across the channel. For bed bugs, the minimum distance between the conducting surfaces should be approximately 0.5mm and the maximum distance should be approximately 4mm.

The depth of the crevice is irrelevant; therefore any sensible length of channel wall may be applied. The main requirement is for the channel can be suitably applied to the bed frame without providing a significant obstruction thereto. However, to provide the suitable folding characteristic the length dimension of the plastic strip 29 is arranged to be significantly greater than the width dimension of the plastic strip 29 and the strip is folded along its centre so as to bring the two remote ends of the strip towards each other.

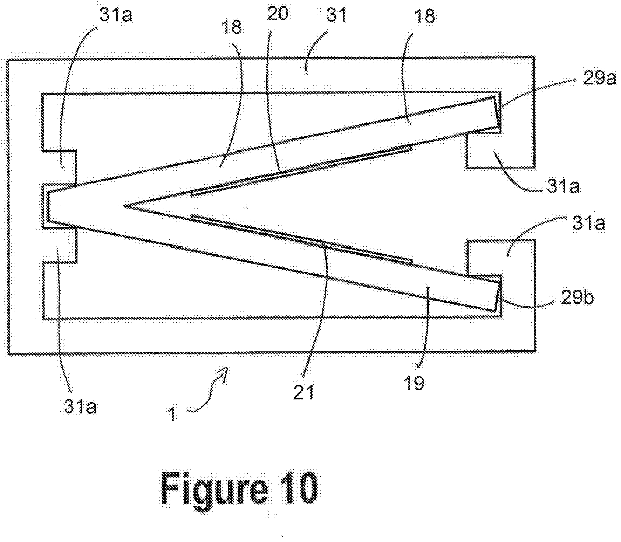

A holding frame or clip 31 as shown in Figure 10 is used for holding the plastic strip 29 in a predetermined 'V' shape so as to define the channel 17. The clip 31 may have inwardly extending protrusions for stopping the movement of the channel out of the 'V' shaped configuration. The clip 31 also comprises an attachment member (not shown) which is for attaching the side walls 18, 19 of the channel 17 to the frame of a bed. For example, it is known for bed bugs to be frequently found between the mattress and the frame during the day. Therefore, positioning the channel between the mattress and the frame is a desirable location so as to maximise the likelihood of insect detection. The clip 31 is made of plastic or another electrically insulating material.

Multiple channels 17 are attached at spaced intervals along the bed frame by their respective clip 31 and attachment means (not shown). The first and second electrically conductable portions 18, 19 of each channel 17 may be attached to their own individual power supplies 22. Alternatively, the first and second conductable portions 20, 21 of each channel may be arranged to be powered by a single electrical power supply 22. In this arrangement the individual devices may be arranged in a parallel configuration or in a series configuration.

The insect detection indicator may also be applied to this resistance detection method of this second embodiment of the invention.

In use, there is a method of detecting an insect. The method comprises providing a channel 17 having a first and second side wall 18, 19. The first side wall 18 has a first electrically conductable portion 7 and the second side wall 19 has a second electrically conductable portion 8. Next an electrical power source 22 is applied between the first and second electrically conductable portions 20, 21.

To make a detection, an insect is used to change the operational state of the circuit from the first operational state in which an open circuit is provided to the second operational state in which a closed circuit is provided. As mentioned above, in the first operational state the first and second electrically conductable portions 5, 6 are electrically isolated across the channel 17. However, in the second operational configuration, the first and second electrically conductable portions 20, 21 are electrically coupled via the presence of an insect, whereby the insect is in contact with the first and second electrically conductable portions 20, 21 enabling current to flow across the channel 17. Therefore, this arrangement provides a method of detecting an insect through the completion of an electric circuit.

A resistance monitoring circuit may be used to determine the change in resistance in the circuit between the first operative state and second operative state. In the second operational state, the actual resistance may be detected enabling the type of insect to be identified in dependence upon the measured resistance, whereby different insects are associated with different electrical resistances.

Various modifications to the principles described above would suggest themselves to the skilled person.

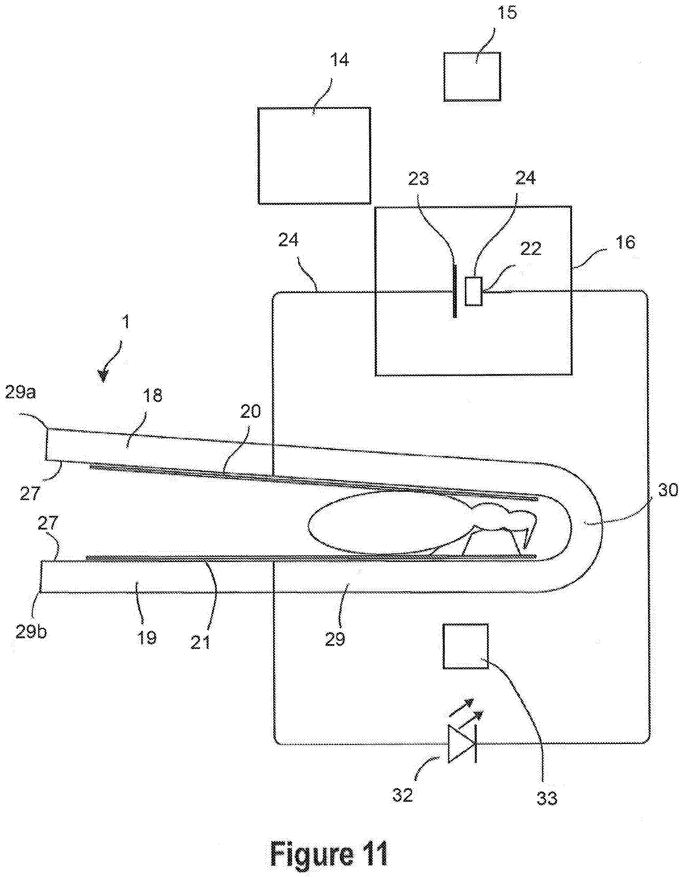

For example, as shown in Figure 11, the electrical circuit parameter monitoring circuitry may comprise an optical emitter 32, for example an LED, whose optical signal is dependent upon a circuit parameter, for example resistance or capacitance. An optical detector 33 can sense any change in the luminosity of the optical signal or beam. This assembly can also be applied with the device as shown in Figure 1.

Alternatively to WI Fl, other wireless solutions may be applied.

Also, due the size of the device it is microelectronic circuitry that is implemented to detect the change in electrical impedance or resistance.

The insects need not be bed bugs, but may instead be another insect type, e.g. cockroaches.

When considering the resistive detection method, the shape of the channel need not be 'V' shaped and may instead be 'U' shaped, or another shape providing a suitable crevice (for example a 'W' shape).

In an alternative embodiment of the invention, the first operational state may be a closed circuit and the second operational state may be a shorting of the closed circuit by the insertion of a cockroach in the channel. This arrangement would also provide a change in resistance or impedance when an insect is present. However, it is more energy efficient for the default circuit (i.e. the circuit in the first operational state when there is no bed bug present in the channel) to be an open circuit rather than a closed circuit. This is also believed to be the safest arrangement so as to minimise the likelihood of an electric shock being applied to a person sleeping on the mattress.

Alternatively to a plastic, an alternative durable and inexpensive material may be used to form the channel walls. Ideally this material would be an electrical insulator so as to minimise the risk of transferring electricity to the bed frame, which may consequentially provide an electric shock to a person who touches it.

For a larger insect, the minimum distance between the conducting surfaces should be approximately 6 mm and the maximum distance should be approximately 8 mm.

## Claims

1. A device for detecting an insect comprising:
an insect harbourage (2) having a first (3,18) and second (4,19) side wall, at least part of the first side wall (3,18) being spaced apart from at least part of the second side wall (4,19) so as to define an insect receiving zone therebetween;
a first electrically conductable portion (7,20) located on, or adjacent to the first side wall (3,18);
a second electrically conductable portion (8,21) located on or adjacent to the second side wall (4,19), the first and second electrically conductable portions forming at least part of an electrical component wherein the electrical component is configurable between a first operative state in which the zone is void of any insects causing the electrical component to have a predetermined first capacitance value and a second operative state in which the zone is in receipt of an insect causing the component to have a second capacitance value differing to the first capacitance value, wherein the predetermined first capacitance value is dependent on the value of an atmospheric parameter, **characterised in that** the harbourage (2) further comprises a corrugated structure (5) sandwiched between the first (3,18) and second (4,19) walls.

2. A device according to claim 1, wherein the device further comprises an electrical circuit in which the electrical component is connected.

3. A device according to claim 1, wherein the capacitor has a dielectric layer comprising air.

4. A device according to any of claims 3, wherein change of the composition of the dielectric as a result of receipt of at least one insect in the zone causes changes in the capacitance value of the device.

5. A device according to claim 4, wherein there further comprises a monitoring means for monitoring the capacitance value and determining whether there is a deviation from the predetermined first capacitance value.

6. A device according to any preceding claim, wherein the first (20) and second (21) conductable portions comprise a conductive coating (26) applied to at least a portion of the surface of the first side wall (18) and the second side wall (19) of the harbourage.

7. A device according to any preceding claim, wherein the first (7,20) and second (8,21) conductable portions comprise copper tape located on the first (3,18) and second (4,19) wall respectively.

8. A device according to any preceding claim, wherein first and second plates are applied to an external surface of the first (3) and second wall (4) respectively.

9. A device according to claim 1, wherein in a first operative state the first electrically conductable portion (7,20) is electrically isolated from the second conducting portion (8,21) across the a channel (6,17) to create an open circuit and in a second operative state, the first electrically conductable portion (7,20) is electrically coupled to the second conducting portion (8,21) across the channel (6,17) to create a closed circuit.

10. A device according to claim 9, wherein the first conductable portion (7) is located on at least a portion of an internal surface of the first side wall (3) of the harbourage (2) and the second conductable portion (8) is located on at least a portion of an internal surface of the second side wall (4) of the harbourage (2).

11. A device according to claim 9 or claim 10, wherein in the first operative state the first conducting portion (7,20) is spaced apart from the second conducting portion (8,21) to provide electrical isolation across the zone.

12. A device according to any of claims 9 to 11, wherein in the second operative state an insect is located within the zone such that it makes contact with the first (7,20) and second (8,21) conductable portions to electrically couple the first electrically conductable portion (7,20) to the second conductable portion (8,21) across the zone.

13. A device according to any of claims 9 to 12, further comprising an optical emitter (32) positioned in series or in parallel with the electric power source (22) and an optical sensor (33) for monitoring the change in optical emission from the optical emitter (32) between the first operational state and the second operational state.

14. A method of detecting an insect, the method comprising:
providing a harbourage (2) having a first (3,18) and second (4,19) side wall, the first side wall (3,18) having a first electrically conductable portion (7,20) positioned or or adjacent to the side wall and the second side wall (4,19) having a second electrically conductable portion (8,21) positioned on or adjacent to the second side wall, at least a portion of the first and second side wall being spaced apart from each other and defining an insect receiving zone, wherein the harbourage (2) comprises a corrugated structure (5) sandwiched between the first (3,18) and second side walls (4,19), the method comprising monitoring for a change in the operational state of the device from a first electrical state having a predetermined first capacitance value to a second operative state having a second capacitance value differing to the first capacitance value;
determining that at least one insect being positioned in the zone, wherein the predetermined first capacitance value is dependent on the value of an atmospheric parameter.

## Patentansprüche

1. Vorrichtung zum Erfassen eines Insekts, die Folgendes umfasst:
einen Insektenunterschlupf (2), der eine erste (3, 18) und eine zweite (4, 19) Seitenwand aufweist, wobei wenigstens ein Teil der ersten Seitenwand (3, 18) von wenigstens einem Teil der zweiten Seitenwand (4, 19) beabstandet ist, um dazwischen eine Insektenaufnahmezone zu definieren;
einen ersten elektrisch leitfähigen Abschnitt (7, 20), der sich auf oder neben der ersten Seitenwand (3,18) befindet;
einen zweiten elektrisch leitfähigen Abschnitt (8, 21), der sich auf oder neben der zweiten Seitenwand (4, 19) befindet, wobei der erste und der zweite elektrisch leitfähige Abschnitt wenigstens einen Teil einer elektrischen Komponente ausbilden, wobei die elektrische Komponente zwischen einem ersten Betriebszustand, in dem die Zone frei von jeglichen Insekten ist, was bewirkt, dass die elektrische Komponente einen zuvor bestimmten ersten Kapazitätswert aufweist, und einem zweiten Betriebszustand, in dem die Zone ein Insekt aufnimmt, was bewirkt, dass die Komponente einen zweiten Kapazitätswert aufweist, der sich von dem ersten Kapazitätswert unterscheidet, konfigurierbar ist, wobei der zuvor bestimmte erste Kapazitätswert von dem Wert eines atmosphärischen Parameters abhängig ist,
**dadurch gekennzeichnet, dass** der Unterschlupf (2) ferner eine gewellte Struktur (5) umfasst, die zwischen der ersten (3, 18) und der zweiten (4, 19) Wand eingeschoben ist.

2. Vorrichtung nach Anspruch 1, wobei die Vorrichtung ferner einen elektrischen Stromkreis umfasst, in dem die elektrische Komponente angeschlossen ist.

3. Vorrichtung nach Anspruch 1, wobei der Kondensator eine dielektrische Schicht aufweist, die Luft umfasst.

4. Vorrichtung nach einem der Ansprüche 3, wobei eine Änderung der Zusammensetzung des Dielektrikums infolge der Aufnahme wenigstens eines Insekts in der Zone Änderungen des Kapazitätswerts der Vorrichtung bewirkt.

5. Vorrichtung nach Anspruch 4, wobei sie ferner ein Überwachungsmittel zum Überwachen des Kapazitätswerts und zum Bestimmen, ob es eine Abweichung von dem zuvor bestimmten ersten Kapazitätswert gibt, umfasst.

6. Vorrichtung nach einem der vorhergehenden Ansprüche, wobei der erste (20) und der zweite (21) leitfähige Abschnitt eine leitende Beschichtung (26) umfassen, die auf wenigstens einen Abschnitt der Oberfläche der ersten Seitenwand (18) und der zweiten Seitenwand (19) des Unterschlupfs aufgebracht ist.

7. Vorrichtung nach einem der vorhergehenden Ansprüche, wobei der erste (7, 20) und der zweite (8, 21) leitfähige Abschnitt ein Kupferband umfassen, das sich auf der ersten (3, 18) beziehungsweise zweiten (4, 19) Wand befindet.

8. Vorrichtung nach einem der vorhergehenden Ansprüche, wobei eine erste und eine zweite Platte auf einer Außenoberfläche der ersten (3) beziehungsweise zweiten Wand (4) aufgebracht sind.

9. Vorrichtung nach Anspruch 1, wobei in einem ersten Betriebszustand der erste elektrisch leitfähige Abschnitt (7, 20) von dem zweiten leitfähigen Abschnitt (8, 21) über einen Kanal (6, 17) hinweg elektrisch isoliert ist, um einen offenen Stromkreis zu erzeugen, und in einem zweiten Betriebszustand der erste elektrisch leitfähige Abschnitt (7, 20) über den Kanal hinweg mit dem zweiten leitfähigen Abschnitt (8, 21) elektrisch gekoppelt ist, um einen geschlossenen Stromkreis zu erzeugen.

10. Vorrichtung nach Anspruch 9, wobei sich der erste leitfähige Abschnitt (7) auf wenigstens einem Abschnitt einer Innenoberfläche der ersten Seitenwand (3) des Unterschlupfs (2) befindet und sich der zweite leitfähige Abschnitt (8) auf wenigstens einem Abschnitt einer Innenoberfläche der zweiten Seitenwand (4) des Unterschlupfs (2) befindet.

11. Vorrichtung nach Anspruch 9 oder 10, wobei in dem ersten Betriebszustand der erste leitfähige Abschnitt (7, 20) von dem zweiten leitfähigen Abschnitt (8, 21) beabstandet ist, um eine elektrische Isolation über die Zone hinweg bereitzustellen.

12. Vorrichtung nach einem der Ansprüche 9 bis 11, wobei sich in dem zweiten Betriebszustand ein Insekt innerhalb der Zone derart befindet, dass es mit dem ersten (7, 20) und zweiten (8, 21) leitfähigen Abschnitt in Berührung kommt, um den ersten elektrisch leitfähigen Abschnitt (7, 20) mit dem zweiten leitfähigen Abschnitt (8, 21) über die Zone hinweg elektrisch zu koppeln.

13. Vorrichtung nach einem der Ansprüche 9 bis 12, die ferner einen optischen Emitter (32), der in Reihe oder parallel zu der elektrischen Stromquelle (22) positioniert ist, und einen optischen Sensor (33) zum Überwachen der Änderung der optischen Emission von dem optischen Emitter (32) zwischen dem ersten Betriebszustand und dem zweiten Betriebszustand umfasst.

14. Verfahren zum Erfassen eines Insekts, wobei das Verfahren Folgendes umfasst:
Bereitstellen eines Unterschlupfs (2), der eine erste (3,18) und eine zweite (4,19) Seitenwand aufweist, wobei die erste Seitenwand (3,18) einen ersten elektrisch leitfähigen Abschnitt (7,20) aufweist, der auf oder neben der Seitenwand positioniert ist, und die zweite Seitenwand (4, 19) einen zweiten elektrisch leitfähigen Abschnitt (8, 21) aufweist, der auf oder neben der zweiten Seitenwand positioniert ist, wobei wenigstens ein Abschnitt der ersten und der zweiten Seitenwand voneinander beabstandet ist und eine Insektenaufnahmezone definiert, wobei der Unterschlupf (2) eine gewellte Struktur (5) umfasst, die zwischen der ersten (3,18) und der zweiten Seitenwand (4, 19) eingeschoben ist, wobei das Verfahren Folgendes umfasst:
Überwachen auf eine Änderung des Betriebszustands der Vorrichtung von einem ersten elektrischen Zustand, der einen zuvor bestimmten ersten Kapazitätswert aufweist, in einen zweiten Betriebszustand, der einen zweiten Kapazitätswert aufweist, der sich von dem ersten Kapazitätswert unterscheidet;
Bestimmen, dass wenigstens ein Insekt in der Zone positioniert ist, wobei der zuvor bestimmte erste Kapazitätswert von dem Wert eines atmosphärischen Parameters abhängig ist.

## Revendications

1. Dispositif de détection d'un insecte comprenant :
un habitat pour insectes (2) ayant une première (3, 18) et une seconde (4, 19) paroi latérale, au moins une partie de la première paroi latérale (3, 18) étant espacée d'au moins une partie de la seconde paroi latérale (4, 19) de manière à définir une zone de réception d'insectes entre elles ;
une première section électriquement conductrice (7, 20) située sur, ou adjacente à, la première paroi latérale (3, 18) ;
une seconde section électriquement conductrice (8, 21) située sur, ou adjacente à, la seconde paroi latérale (4, 19), les première et seconde sections électriquement conductrices formant au moins une partie d'un composant électrique dans lequel le composant électrique est configurable entre un premier état de fonctionnement dans lequel la zone est dépourvue d'insectes, amenant le composant électrique à avoir une première valeur de capacité prédéterminée et un second état de fonctionnement dans lequel la zone reçoit un insecte, amenant le composant à avoir une seconde valeur de capacité différente de la première valeur de capacité, dans lequel la première valeur de capacité prédéterminée dépend de la valeur d'un paramètre atmosphérique,
**caractérisé en ce que** l'habitat (2) comprend en outre une structure ondulée (5) prise en sandwich entre les première (3, 18) et seconde (4, 19) parois.

2. Dispositif selon la revendication 1, dans lequel le dispositif comprend en outre un circuit électrique dans lequel le composant électrique est connecté.

3. Dispositif selon la revendication 1, dans lequel le condensateur a une couche diélectrique comprenant de l'air.

4. Dispositif selon l'une quelconque des revendications 3, dans lequel le changement de la composition du diélectrique suite à la réception d'au moins un insecte dans la zone amène des changements dans la valeur de capacité du dispositif.

5. Dispositif selon la revendication 4, dans lequel le dispositif comprend en outre un moyen de surveillance pour surveiller la valeur de capacité et déterminer s'il y a un écart par rapport à la première valeur de capacité prédéterminée.

6. Dispositif selon l'une quelconque des revendications précédentes, dans lequel les première (20) et seconde (21) sections conductrices comprennent un revêtement conducteur (26) appliqué sur au moins une section de la surface de la première paroi latérale (18) et de la seconde paroi latérale (19) de l'habitat.

7. Dispositif selon l'une quelconque des revendications précédentes, dans lequel les première (7, 20) et seconde (8, 21) sections conductrices comprennent une bande de cuivre située respectivement sur la première (3, 18) et la seconde (4, 19) parois respectivement.

8. Dispositif selon l'une quelconque des revendications précédentes, dans lequel des première et seconde plaques sont appliquées sur une surface externe des première (3) et seconde parois (4) respectivement.

9. Dispositif selon la revendication 1, dans lequel, dans un premier état de fonctionnement, la première section électriquement conductrice (7, 20) est électriquement isolée de la seconde section conductrice (8, 21) à travers un canal (6, 17) pour créer un circuit ouvert et dans un second état de fonctionnement, la première section électriquement conductrice (7, 20) est couplée électriquement à la seconde section conductrice (8, 21) à travers le canal pour créer un circuit fermé.

10. Dispositif selon la revendication 9, dans lequel la première section conductrice (7) est située sur au moins une section d'une surface interne de la première paroi latérale (3) de l'habitat (2) et la seconde section conductrice (8) est située sur au moins une section d'une surface interne de la seconde paroi latérale (4) de l'habitat (2).

11. Dispositif selon la revendication 9 ou la revendication 10, dans lequel, dans le premier état de fonctionnement, la première section conductrice (7, 20) est espacée de la seconde section conductrice (8, 21) pour fournir une isolation électrique à travers la zone.

12. Dispositif selon l'une quelconque des revendications 9 à 11, dans lequel, dans le second état de fonctionnement, un insecte est situé à l'intérieur de la zone de telle sorte qu'il entre en contact avec les première (7,20) et seconde (8,21) sections conductrices afin de coupler électriquement la première section électriquement conductrice (7, 20) à la seconde section conductrice (8, 21) à travers la zone.

13. Dispositif selon l'une quelconque des revendications 9 à 12, comprenant en outre un émetteur optique (32) positionné en série ou en parallèle avec la source d'énergie électrique (22) et un capteur optique (33) pour surveiller le changement d'émission optique de l'émetteur optique (32) entre le premier état de fonctionnement et le second état de fonctionnement.

14. Procédé de détection d'un insecte, le procédé comprenant :
le fourniture d'un habitat (2) ayant une première (3, 18) et une seconde (4, 19) paroi latérale, la première paroi latérale (3, 18) ayant une première section électriquement conductrice (7, 20) positionnée sur, ou adjacente à, la paroi latérale et la seconde paroi latérale (4, 19) ayant une seconde section électriquement conductrice (8, 21) positionnée sur, ou adjacente à, la seconde paroi latérale, au moins une section des première et seconde parois latérales étant espacée l'une de l'autre et définissant une zone de réception d'insectes dans laquelle l'habitat (2) comprend une structure ondulée (5) prise en sandwich entre la première (3, 18) et seconde paroi latérale (4, 19), le procédé comprenant
la surveillance d'un changement dans l'état de fonctionnement du dispositif d'un premier état électrique ayant une première valeur de capacité prédéterminée à un second état de fonctionnement ayant une seconde valeur de capacité différente de la première valeur de capacité ;
la détermination qu'au moins un insecte est positionné dans la zone, dans lequel la première valeur de capacité prédéterminée dépend de la valeur d'un paramètre atmosphérique.
